# FASCICULE DE BREVET EUROPEEN

(11) **EP 0 881 059 B1**
(45) Date de publication et mention de la délivrance du brevet: **04.09.2002**
(21) Numéro de dépôt: 98109276.0
(22) Date de dépôt: 22.05.1998
(51) Int. Cl.: B29D 30/08

(54) **Fabrication d'un pneu dans lequel la bande de roulement est réalisée à partir de plusieurs parties prévulcanisées**
Verfahren zur Herstellung eines Reifens dessen Lauffläche aus mehreren vorvulkaniserten Einzelteilen besteht
Process for manufacturing a tyre whose tread consists of prevulcanized components

(30) Priorité: 30.05.1997 FR 9706768
(43) Date de publication de la demande: 02.12.1998
(73) Titulaire: Compagnie Générale des Etablissements MICHELIN-MICHELIN & CIE, 63040 Clermont-Ferrand Cedex 09 (FR)
(72) Inventeur: Jara, Adam, 63000 Clermont-Ferrand (FR); Gazuit, Georges, 03100 Montlucon (FR)
(74) Mandataire: Dequire, Philippe Jean-Marie Denis

(56) Documents cités:
- EP-A- 0 039 658
- EP-A- 0 681 931
- FR-A- 1 411 387
- GB-A- 744 827
- GB-A- 1 577 154
- US-A- 2 649 891
- US-A- 2 672 914
- US-A- 3 963 393
- US-A- 4 111 619
- US-A- 5 066 448

## Description

La présente invention concerne les bandages et les pneumatiques. Plus particulièrement elle concerne une méthode de fabrication à partir d'une bande de roulement prémoulée, à l'intérieur de laquelle on poursuit l'assemblage du pneu ou du bandage après l'étape de moulage de la bande de roulement et éventuellement après prévulcanisation de celle-ci.

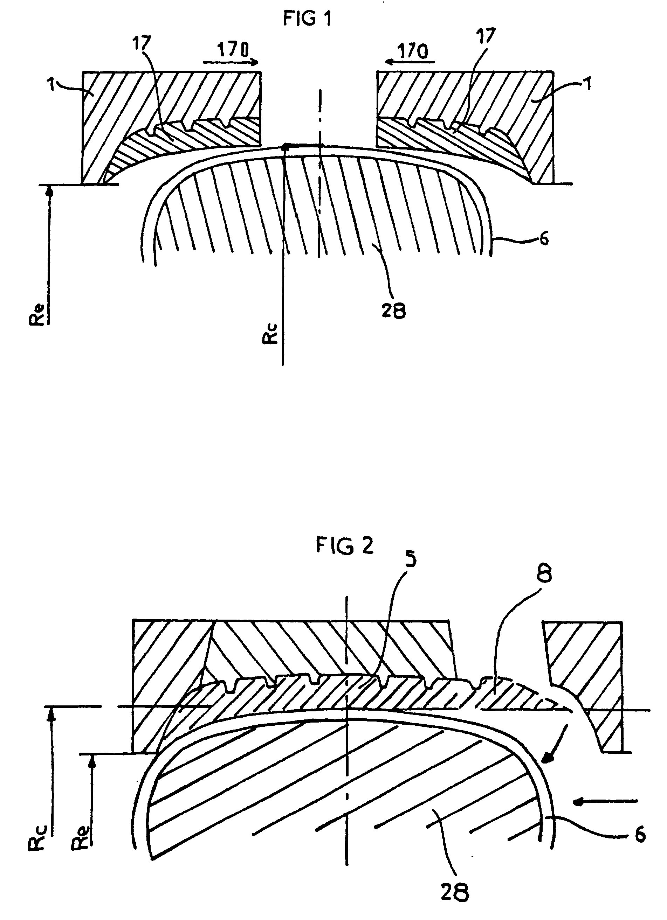

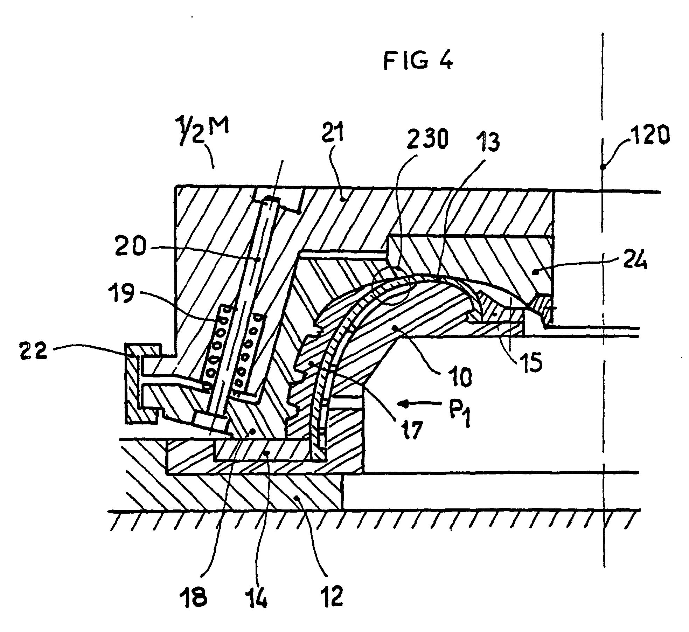

En raison du caractère légèrement bombé de la semelle de la bande de roulement, il est difficile d'insérer radialement à l'intérieur de celle-ci un sous-ensemble comportant tous les autres constituants du pneu, préfabriqué à sa forme finale, tout particulièrement lorsque le sous-ensemble est fabriqué sur un noyau rigide. L'assemblage dudit sous-ensemble et de la bande de roulement impose soit de relever au moins une aile latérale de la bande de roulement comme illustré à la partie droite de la figure 2 du présent mémoire, soit de procéder à une conformation finale dudit sous-ensemble après l'avoir inséré à l'intérieur de la bande de roulement, soit encore de faire appel aux deux artifices rappelés ci-dessus, comme illustré à la figure 4 de la demande de brevet EP 0 540 048. A la figure 2 du présent mémoire, on voit que la différence entre le rayon minimal Re du moule de la bande de roulement 5 et le rayon maximal Rc d'une ébauche 6, pour pouvoir insérer de façon coaxiale un noyau rigide 28 supportant ladite ébauche 6, impose d'ouvrir au moins un côté du moule et de relever l'aile latérale 8 de la bande de roulement.

Or les efforts déployés à l'heure actuelle visent à améliorer la précision de fabrication des pneus, notamment en diminuant ou en supprimant les transferts d'ébauche d'un appareillage à un autre et en diminuant ou en supprimant les étapes de conformation responsables de distorsions parasites de forme du pneu fabriqué. Dès lors, les artifices de fabrication rappelés ci-dessus font perdre tout ou partie du bénéfice apporté par la référence de fabrication rigide constituée par le moule de la bande de roulement.

Le brevet US 2,672,914 divulgue un procédé de fabrication d'un pneu ou d'un bandage consistant à mouler séparément une bande de roulement en caoutchouc à l'intérieur d'un moule puis à assembler ladite bande de roulement et les autres constituants du pneu puis, après vulcanisation, démouler la bande de roulement, dans lequel la bande de roulement est fabriquée en au moins deux parties axiales pour constituer un premier et un second anneaux partiels supportés respectivement par un premier et un second moules annulaires partiels, et dans lequel lesdits moules annulaires partiels sont rapprochés l'un contre l'autre pour réunir lesdits anneaux partiels afin de former la bande de roulement et afin de coopérer avec un sous-ensemble interne pour parachever l'assemblage du pneu. Dans ce brevet le sous-ensemble interne comporte une carcasse de pneumatique, une couche extérieure de mélange caoutchouteux et une membrane de cuisson.

La présente invention a pour objectif de proposer une méthode véritablement capable de fabriquer un pneu sans imposer de conformation à la bande de roulement ou de fluage du caoutchouc de la bande de roulement dû aux conformations ou au moulage.

Le procédé selon l'invention, pour la fabrication d'un pneu, consiste à mouler et à prévulcaniser séparément une bande de roulement en caoutchouc à l'intérieur d'un moule puis à assembler ladite bande de roulement et les autres constituants du pneu puis, après vulcanisation, démouler la bande de roulement, dans lequel la bande de roulement est fabriquée en au moins deux parties axiales pour constituer un premier et un second anneaux partiels supportés respectivement par un premier et un second moules annulaires partiels, et dans lequel lesdits moules annulaires partiels sont rapprochés l'un contre l'autre pour réunir lesdits anneaux partiels afin de former la bande de roulement et afin de coopérer avec un sous-ensemble interne pour parachever l'assemblage du pneu.

Dans le contexte de l'invention, le terme « pneu » désigne aussi bien les pneus gonflés à l'air que les objets non pneumatiques appelés « bandages », qu'ils soient creux ou pleins. Dans le cas de la fabrication de bandages pleins notamment, le sous-ensemble peut comporter ou être constitué par le noyau interne de caoutchouc alvéolé ou non, ou en caoutchouc mousse, sur lequel on fixe une bande de roulement. Pour fabriquer un pneu présentant une cavité interne, ledit sous-ensemble interne peut comporter un noyau sensiblement rigide dont la forme extérieure correspond sensiblement à la forme de fabrication de la cavité interne du pneu.

L'invention concerne aussi un moule constitué par :
- un demi-noyau comportant une surface sensiblement semi-torique et, du côté des plus grands rayons de ladite surface, un prolongement formant protubérance radialement vers l'extérieur,
- un support contenant un ensemble de secteurs comportant à leur face radialement intérieure des éléments définissant une sculpture de bande de roulement de pneu et comportant à leur face radialement extérieure une portée inclinée par rapport à l'axe de révolution du moule, lesdits secteurs étant mobiles axialement et radialement par rapport audit support, guidés par des glissières inclinées par rapport à l'axe de révolution du moule, et l'espace de moulage étant défini en position de fermeture du moule entre ladite surface sensiblement semi-torique, la surface radialement intérieure des secteurs et une face latérale dudit prolongement.

L'invention sera mieux comprise par la description qui va suivre, d'un exemple donné à titre non limitatif, en se référant aux figures annexées dans lesquelles :
- la figure 1 illustre schématiquement l'invention,
- la figure 2 illustre l'état de la technique,
- la figure 3 montre plus en détail une partie du moule selon l'invention, et illustre la fabrication de la demi-bande de roulement,
- la figure 4 illustre l'étape de moulage de la demi-bande de roulement,
- la figure 5 illustre la phase finale de la fabrication d'un pneu,
- la figure 6 illustre l'extrémité de la bande de roulement dans une première mise en oeuvre de l'invention,
- la figure 7 illustre l'extrémité de la bande de roulement dans une autre mise en oeuvre de l'invention, pendant une première phase de la réalisation,
- la figure 8 illustre l'extrémité de la bande de roulement dans la même autre mise en oeuvre de l'invention, pendant une phase ultérieure de la réalisation.

Dans la suite, on voit que la bande de roulement est fabriquée par moitiés d'égale largeur, ce qui n'est qu'un cas particulier ne limitant pas la portée de l'invention. A la figure 1, on voit deux moules annulaires partiels 1 supportant chacun une demi-bande de roulement 17 (les anneaux partiels dont il est question ci-dessus). Les demi-bandes de roulement 17 ont été préalablement moulées : la sculpture du futur pneu est donc déjà imprimée dans le caoutchouc. On voit aussi un noyau rigide 28, qui supporte une ébauche 6 comportant les autres constituants du futur pneu : cette ébauche a donc été préalablement fabriquée sur le noyau rigide 28 par empilement des constituants dans l'ordre et à la place requise par l'architecture du futur pneu.

On observe que le rayon maximal de cette ébauche vaut Rc, alors que le rayon minimal des moules annulaires partiels 1 vaut Re, qui est sensiblement plus petit que Rc. La séparation en deux moitiés axiales de la bande de roulement permet l'assemblage final entre la bande de roulement et l'ébauche, tous deux préalablement fabriqués séparément, et ceci sans qu'il soit nécessaire de procéder à une ou des déformations ou conformations.

Les flèches 170 symbolisent que cet assemblage passe par une insertion du noyau 28 supportant l'ébauche 6 entre les moules annulaires partiels, tous les éléments étant disposés de façon coaxiale, puis par un rapprochement axial relatif des moules annulaires partiels 1. Le léger bombé de l'ébauche permet d'assurer une pression de contact suffisante entre l'ébauche et la bande de roulement.

Ceci concerne l'application de l'invention pour fabriquer des pneus en caoutchouc. Mais l'invention trouve aussi application pour fabriquer des pneus avec une matière pouvant être coulée, par exemple du polyuréthanne. Dans ce cas, on procède au même mouvement relatif entre noyau rigide 28 et moules annulaires partiels 1, pour créer une cavité entre les demi-bandes de roulement. Le polyuréthanne peut ensuite être coulé dans ladite cavité.

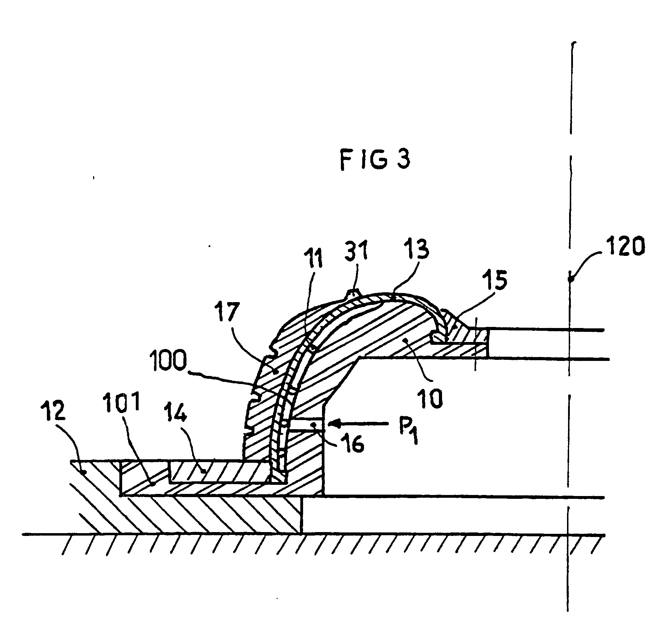

La fabrication d'une demi-bande de roulement est décrite plus en détail avec l'aide des figures 3, 4 et 6 à 8. Un demi-noyau 10, dont l'allure générale de la surface radialement supérieure 100 est proche d'un demi-tore, comporte des rainures périphériques 11. Le demi-noyau 10 comporte, du côté des plus grands rayons de ladite surface 100, un prolongement 101 formant protubérance radialement vers l'extérieur. Le demi-noyau 10 est fixé sur un mandrin 12 concentrique à l'axe vertical 120. Le demi-noyau 10 est revêtu d'une membrane élastique 13 étanche. Ladite membrane élastique 13 est fixée sur le demi-noyau 10 par 2 anneaux 14 et 15. Une alimentation en air 16 permet de gonfler la membrane élastique 13. Au repos, la membrane élastique 13 est dégonflée et plaquée contre le demi-noyau 10.

On pose par toute méthode appropriée un mélange constituant la bande de roulement. Par exemple, on réalise une demi-bande de roulement par enroulement de bandelettes, ou d'un produit profilé. Le mélange constituant chacune des demi-bandes de roulement 17 est enroulé autour du demi-noyau 10 de façon à déposer un volume approprié.

On descend ensuite le moule de la demi-bande de roulement (voir figure 4). Ledit moule comporte des secteurs 18, en nombre approprié, montés sur un support 21. Les secteurs 18 sont au départ tous écartés sous l'action de ressorts 19 agissant suivant la génératrice délimitée par des glissières 20. Lorsque les secteurs 18 viennent en contact d'un anneau 14 solidaire du demi-noyau 10, la descente du support 21 provoque la rentrée centripète des secteurs 18. Une pression p1 est alors appliquée dans la membrane élastique 13 provoquant ainsi une pression constante d'application de la gomme dans toute la périphérie de l'anneau porte sculpture donc dans la bande de roulement 17, ce qui assure l'homogénéisation du produit.

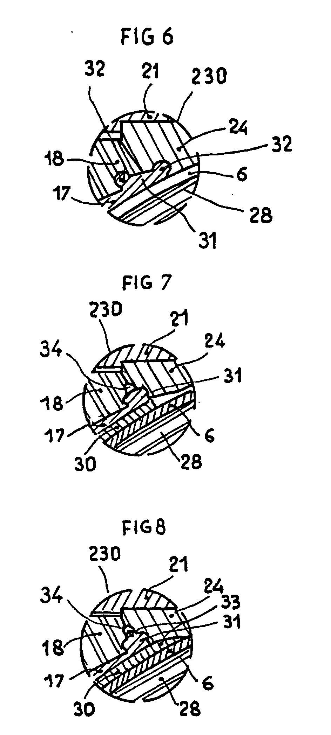

L'étanchéité de fermeture du volume représentant la demi-bande de roulement est assurée par le contact, sous pression d'air, de la membrane élastique avec le flanc du moule 24, ou une pièce approchante. Pour éviter le passage de matière à la surface extérieure des demi-bandes de roulement prévulcanisées, les bords des secteurs 18 et le bord du flanc 24 comportent une disposition particulière, bien visible grâce au grossissement 230 dont on voit différentes formes de réalisation aux figures 6 à 8. Des gorges 32 (figure 6) créant une perte de charge élevée dans le flux de matière se dirigeant vers l'interface entre pièces du moule, assurent que la matière n'aura pas tendance à s'infiltrer entre secteurs 18 et flanc 24 du moule. Quelle que soit la variante d'exécution retenue, il s'agit dans ce mode préférentiel de réalisation de l'invention de créer une protubérance 31 aux ailes de la bande de roulement. Cette protubérance 31 est dans l'illustration de la figure 6 limitée par des gorges 32, ayant pour but d'aider à empêcher la désolidarisation de la demi-bande de roulement lors du refroidissement après prévulcanisation, et aussi soit d'assurer une protection si le pneu fini comporte cette protubérance 31, soit de faciliter la coupe ultérieure si l'on souhaite retirer la protubérance 31 du pneu fini.

La prévulcanisation de la bande de roulement peut se dérouler.

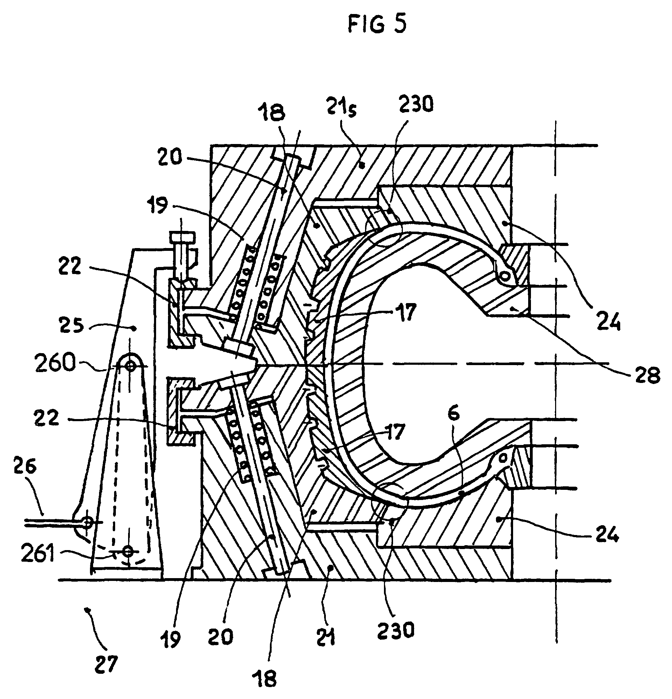

Après prévulcanisation des deux demi-bandes de roulement, on réalise l'assemblage du pneu. La bande de roulement étant prévulcanisée en deux moitiés, on illustre ci-dessous d'abord son emploi dans le contexte de la fabrication d'un pneu en polyuréthanne (figure 5), puis son emploi dans le contexte de la fabrication d'un pneu en caoutchouc.

Commentons d'abord le mode de réalisation faisant appel au polyuréthanne. Le moule inférieur avec sa bande de roulement 17 prévulcanisée, est donc au départ centré sur un plateau 27 comparable à celui d'une presse de vulcanisation. On pose à l'intérieur du moule l'ensemble des renforcements supporté par le noyau rigide 28. On descend alors le moule supérieur lui même équipé de la demi-bande de roulement prévulcanisée puis on assemble les deux demi-moules qui sont verrouillés par des genouillères 25 poussées par des vérins 26.

On applique ensuite les conditions nécessaires au bon remplissage du moule, puis on procède au remplissage par injection d'un matériau liquide permettant ensuite d'appliquer une pression hydrostatique favorisant l'imprégnation des renforts et la liaison avec la bande de roulement. La fin de vulcanisation de la bande de roulement et la polymérisation du matériau liquide s'effectuent dans ces conditions.

Le second mode d'exécution fait appel à une carcasse préassemblée, de préférence prévulcanisée. Le sous-ensemble formé par la carcasse est revêtu d'une gomme de liaison 30 (voir figures 7 et 8). Le moule inférieur avec sa bande de roulement 17 (voir figure 5, montrant des aspects communs aux utilisations de caoutchouc ou de polyuréthanne) est centré sur un plateau 27 d'une presse de vulcanisation. On pose à l'intérieur du moule le sous-ensemble constitué par la carcasse revêtue d'une gomme de liaison, supporté soit par un noyau rigide, soit par un tambour conformant, soit par tout autre dispositif approprié. On descend ensuite le moule supérieur, lui-même supportant une demi-bande de roulement, pour arriver à une position d'approche non verrouillée. Puis, simultanément, on approche, par un mouvement axial, les 2 coquilles équipée des deux demi-bandes de roulement. Ce mouvement permet de créer une pression dans le volume de caoutchouc pour assurer la liaison et la vulcanisation de l'ensemble.

De façon à réaliser la vulcanisation dans des conditions idéales (pression et température) le chauffage s'effectue de manière connue en soi, par exemple par voie électrique, soit par résistances, soit par induction.

Les demi-bandes de roulement étant prévulcanisées, pendant le mouvement axial lors du rapprochement des demi-bandes de roulement, la gomme de liaison finit par être emprisonnée entre la carcasse et les anneaux partiels formant les demi-bandes de roulement. L'excédent de gomme de liaison tend à fluer (figures 7 et 8). Le volume d'accueil nécessaire est procuré par la déformation de la protubérance 31 de caoutchouc qui tend alors à s'enfoncer dans une gorge 34 située entre les extrémités des secteurs 18 et de la pièce de moulage du flanc 24. Les deux demi-moules sont verrouillés par des genouillères 25 poussées par les vérins 26, le bras le plus court de la genouillère 25 étant articulé autour du point 260 fixe dans l'espace, et la bras le plus long de ladite genouillère étant articulé sur le bras court au point 261. La vulcanisation de l'ensemble s'effectue dans ces conditions.

Le démoulage est réalisé après vulcanisation complète.

Les avantages de la réalisation d'une bande de roulement en 2 parties sont les suivants. On pose dans le moule de coulée les deux demi-bandes de roulement prévulcanisées sans aucune déformation. La coulée hydrostatique du polyuréthanne assure l'homogénéité des pressions sous la surface de la bande de roulement, garante d'un bon collage. La pression hydrostatique assure le contact homogène de la surface extérieure de la bande de roulement avec le moule, ce qui assure l'uniformité géométrique du pneu. L'état de prévulcanisation est tel que l'énergie nécessaire à la fin de la vulcanisation est compatible avec l'énergie nécessaire à la réticulation du polyuréthanne. Par ailleurs, dans l'application de la méthode à la fabrication d'un pneu en caoutchouc, on offre la possibilité d'appliquer la pression par un mouvement axial d'une partie constitutive de la future bande de roulement. Celle-ci peut avoir une géométrie parfaitement circulaire. Pendant le mouvement axial des demi-bandes de roulement lors de l'assemblage, on crée une pression quasi-hydrostatique par le fluage d'une gomme de liaison à bas module, qui peut de ce fait remplir tout l'espace disponible sans imposer de contrainte trop grande sur les éléments à assembler. Cela permet que le sommet de la bande de roulement conserve sa géométrie initiale. Les demi-bandes de roulement peuvent être prévulcanisées, ce qui est également intéressant car la bande de roulement est en général la partie la plus massive, nécessitant normalement une plus grande quantité d'énergie de vulcanisation.

Un autre avantage de l'invention est qu'elle se prête particulièrement bien à l'interposition, entre les anneaux partiels, d'une matière dont la composition est différente de la composition desdits anneaux partiels, pour offrir une fonction particulière ou plus généralement pour répondre à un besoin spécifique. Par exemple, on peut utiliser le procédé de l'invention pour créer une mince tranche conductrice de l'électricité, s'étendant sur toute l'épaisseur de la bande de roulement, au sein d'une bande de roulement de composition non conductrice de l'électricité.

## Revendications

1. Procédé de fabrication d'un pneu ou d'un bandage consistant à mouler séparément une bande de roulement en caoutchouc à l'intérieur d'un moule puis à assembler ladite bande de roulement et les autres constituants du pneu puis, après vulcanisation, démouler la bande de roulement, dans lequel la bande de roulement est fabriquée en au moins deux parties axiales pour constituer un premier et un second anneaux partiels (17) supportés respectivement par un premier et un second moules annulaires partiels (1), et dans lequel lesdits moules annulaires partiels sont rapprochés l'un contre l'autre pour réunir lesdits anneaux partiels afin de former la bande de roulement et afin de coopérer avec un sous-ensemble interne pour parachever l'assemblage du pneu, **caractérisé en ce que** lesdites deux parties axiales de la bande de roulement sont prévulcanisées séparément avant leur assemblage et **en ce que** le sous-ensemble interne comporte un noyau rigide (28) dont la forme extérieure correspond sensiblement à la forme de fabrication de la cavité interne du pneu.

2. Procédé selon la revendication 1, dans lequel les autres constituants comportent une matrice en polyuréthanne qui est coulée au moins en partie après la mise en contact desdits moules annulaires partiels, dans l'espace clos défini par lesdits anneaux partiels et par ledit sous-ensemble interne.

3. Procédé selon l'une des revendications 1 et 2, dans lequel, entre les anneaux partiels, on interpose une matière dont la composition est différente de la composition desdits anneaux partiels.

4. Procédé selon la revendication 3, utilisé pour créer une mince tranche conductrice de l'électricité, s'étendant sur toute l'épaisseur de la bande de roulement, au sein d'une bande de roulement de composition non conductrice de l'électricité.

5. Moule constitué par :
- un demi-noyau (10) comportant une surface (100) sensiblement semi-torique et, du côté des plus grands rayons de ladite surface, un prolongement (101) formant protubérance radialement vers l'extérieur,
- un support (21) contenant un ensemble de secteurs (18) comportant à leur face radialement intérieure des éléments définissant une sculpture de bande de roulement de pneu et comportant à leur face radialement extérieure une portée inclinée par rapport à l'axe de révolution du moule, lesdits secteurs étant mobiles axialement et radialement par rapport audit support, guidés par des glissières (20) inclinées par rapport à l'axe de révolution du moule, et
l'espace de moulage étant défini en position de fermeture du moule entre ladite surface (100) sensiblement semi-torique, la surface radialement intérieure des secteurs (18) et une face latérale dudit prolongement (101).

6. Moule selon la revendication 5, dans lequel une membrane élastique (13) constituant la surface de moulage recouvre ladite surface (100) sensiblement semi-torique, le demi-noyau (10) comportant des moyens pour mettre sous pression le volume contenu entre la membrane élastique et le demi-noyau.

7. Moule selon 1a revendication 6, dans lequel ladite membrane élastique (13) est fixée au demi-noyau (10) par deux anneaux (14, 15), l'anneau (14) de diamètre le plus élevé étant emboîté dans ledit prolongement (101) formant protubérance radialement vers l'extérieur et coopérant avec ladite surface (100) semi-torique et la surface radialement intérieure des secteurs (18) pour définir l'espace de moulage du moule en position de fermeture.

8. Moule selon l'une des revendications 5 à 7, dans lequel le bord radialement intérieur des secteurs (18) coopère avec le bord radialement extérieur du flanc (24) du moule pour définir une protubérance (31) à l'aile de la demi-bande de roulement.

## Patentansprüche

1. Verfahren zur Herstellung eines Luftreifens oder eines Rad- bzw. Vollreifens, das darin besteht, gesondert eine Lauffläche aus Gummi im Inneren eines Formwerkzeuges abzuformen, dann die genannte Lauffläche und die anderen Bestandteile des Reifens zusammenzubauen, und dann nach der Vulkanisation die Lauffläche auszuformen, worin die Lauffläche aus mindestens zwei axialen Teilen hergestellt ist, um einen ersten und zweiten Teilring (17) zu bilden, die jeweils durch ein erstes und zweites Teilring-Formwerkzeug (1) getragen sind, und worin die genannten Teilring-Formwerkzeuge aneinander für eine Vereinigung der genannten Teilringe angenähert werden, um die Lauffläche zu bilden und um mit einer inneren Baugruppe für die Vollendung des Zusammenbaus des Reifens zusammenzuwirken, **dadurch gekennzeichnet, daß** die beiden genannten axialen Teile der Lauffläche vor ihrem Zusammenbau gesondert vorvulkanisiert werden, und daß die innere Unterbaugruppe einen starren Kern (28) aufweist, dessen äußere Form im wesentlichen der Herstellungsform des inneren Hohlraums des Reifens bzw. Luftreifens entspricht.

2. Verfahren nach Anspruch 1, worin die anderen Bestandteile eine Matrize aus Polyurethan aufweisen, das mindestens teilweise nach der Herstellung der Berührung der genannten kreisringförmigen Teil-Formwerkzeuge in den geschlossenen Raum gegossen wird, der durch die genannten Teilringe und durch die genannte, innere Unterbaugruppe festgelegt ist.

3. Verfahren nach einem der Ansprüche 1 und 2, worin man zwischen den Teilringen ein Material einfügt, dessen Zusammensetzung von der Zusammensetzung der genannten Teilringe verschieden ist.

4. Verfahren nach Anspruch 3, das benutzt wird, um einen schmalen, für Elektrizität leitfähigen Streifen zu erzeugen, der sich über die gesamte Dicke der Lauffläche erstreckt, und zwar inmitten einer Lauffläche mit einer für Elektrizität nicht leitfähigen Zusammensetzung.

5. Formwerkzeug, das gebildet ist durch:
- einen Halbkern (10), der eine im wesentlichen halb-torusförmige Oberfläche (100) und auf der Seite der größten Radien der genannten Oberfläche eine Verlängerung (101) aufweist, die radial nach außen eine Ausstülpung bildet, und
- einen Träger (21), der eine Gruppe von Sektoren (18) enthält, die an ihrer radial inneren Fläche Elemente aufweisen, die ein Reifen-Laufflächenprofil festlegen, und an ihrer radial äußeren Fläche einen Bereich aufweisen, der bezüglich der Rotationsachse des Formwerkzeugs geneigt ist, wobei die genannten Sektoren axial und radial bezüglich des genannten Trägers beweglich sind und durch Gleitführungen (20) geführt sind, die in Bezug zur Rotationsachse des Formwerkzeugs geneigt sind, wobei
der Formgebungsraum in der Schließlage des Formwerkzeugs zwischen der genannten, im wesentlichen halb-torusförmigen Oberfläche (100), der radial inneren Fläche der Sektoren (18) und einer seitlichen Stirnfläche der genannten Verlängerung (101) festgelegt ist.

6. Formwerkzeug nach Anspruch 5, worin eine elastische Membran (13), die die Abformoberfläche bildet, die genannte, im wesentlichen halb-torusförmige Oberfläche (100) abdeckt, wobei der Halbkern (10) Mittel aufweist, um das Volumen unter Druck zu setzen, das zwischen der elastischen Membran und dem Halbkern enthalten ist.

7. Formwerkzeug nach Anspruch 6, worin die genannte elastische Membran (13) am Halbkern (10) mit zwei Ringen (14, 15) befestigt ist, wobei der Ring (14) mit dem größeren Durchmesser in der genannten Verlängerung (101) eingeschlossen ist, die radial nach außen eine Ausstülpung bildet, und mit der genannten halb-torusförmigen Oberfläche (100) und der radial inneren Oberfläche der Sektoren (18) zusammenwirkt, um den Formgebungsraum des Formwerkzeugs in der Schließlage festzulegen.

8. Formwerkzeug nach einem der Ansprüche 5 bis 7, worin der radial innere Rand der Sektoren (18) mit dem radial äußeren Rand der Flanke (24) des Formwerkzeugs zusammenwirkt, um eine Ausstülpung (31) am Flügel der Halb-Lauffläche zu bilden.

## Claims

1. A method for manufacturing a tyre or a tread which consists of moulding a rubber tread separately inside a mould, then assembling said tread and the other constituents of the tyre, and, after vulcanisation, releasing the tread from the mould, in which method the tread is manufactured in at least two axial parts to form a first and a second partial ring (17) which are supported, respectively, by a first and second partial annular mould (1), and in which method said partial annular moulds are brought together in order to join said partial rings together to form the tread and in order to interact with an internal subassembly for finishing off a tyre assembly, **characterised in that** said two axial parts of the tread are prevulcanised separately before their assembly, and **in that** the internal subassembly comprises a rigid core (28), the outer shape of which substantially corresponds to the finished shape of the internal cavity of the tyre.

2. A method according to claim 1, wherein the other constituents comprise a polyurethane matrix which is poured at least partially after said partial annular moulds have been brought into contact into the closed space defined between said partial rings and said internal subassembly.

3. A method according to one of claims 1 and 2, wherein a material, the composition of which differs from the composition of the partial rings, is inserted between said partial rings.

4. A method according to claim 3, used to create a thin electrically conductive portion extending across the entire thickness of the tread within a tread made of a composition that does not conduct electricity.

5. A mould consisting of:
- a half core (10) having a substantially semi-toric surface (100) and, on the same side as the larger radii of said surface, an extension (101) forming a radially outward projection,
- a support (21) containing an assembly of sectors (18) comprising, on their radially inner faces, elements which define a tyre tread pattern and, on their radially outer faces, a bearing surface which is inclined with respect to the axis of revolution of the mould, said sectors being able to move axially and radially with respect to said support, guided by slides (20) which are inclined with respect to the axis of revolution of the mould, and
the moulding space being defined, when the mould is closed, between said substantially semi-toric surface (100), the radially inner surface of the sectors (18) and a lateral face of said extension (101).

6. A mould according to claim 5, in which an elastic membrane (13) constituting the moulding surface covers said semi-toric surface (100), the half core (10) comprising means for pressurising the volume contained between the elastic membrane and the half core.

7. A mould according to claim 6, in which said elastic membrane (13) is fixed to the half core (10) by two rings (14, 15), the ring (14) of greater diameter being fitted into said extension (101) forming a projection radially to the outside and cooperating with said semi-toric surface (100) and the radially inner surface of the sectors (18) to define the moulding space for the mould in the closed position.

8. A mould according to one of claims 5 to 7, in which the radially inner edge of the sectors (18) cooperates with the radially outer edge of the sidewall (24) of the mould to define a protuberance (31) at the wing of the half-tread.
